# EUROPÄISCHE PATENTSCHRIFT

(11) **EP 3 887 091 B1**
(45) Veröffentlichungstag und Bekanntmachung des Hinweises auf die Patenterteilung: **26.10.2022**
(21) Anmeldenummer: 19827586.9
(22) Anmeldetag: 26.11.2019
(51) Int. Cl.: B23Q 39/02, B23Q 39/04

(54) **WERKZEUGMASCHINE MIT EINEM ERSTEN WERKSTÜCKTISCH UND EINEM ZWEITEN WERKSTÜCKTISCH**
MACHINE TOOL WITH A FIRST AND A SECOND WORKTABLE
MACHINE-OUTIL AVEC UN PREMIER ET UN DEUXIEME SUPPORT DE PIECES

(30) Priorität: 29.11.2018 AT 510582018
(43) Veröffentlichungstag der Anmeldung: 06.10.2021
(73) Patentinhaber: Fill Gesellschaft m.b.H., 4942 Gurten (AT)
(72) Erfinder: DALLINGER, Friedrich, 4942 Gurten (AT)
(74) Vertreter: Burger, Hannes
(86) Internationale Anmeldenummer: PCT/AT2019/060401
(87) Internationale Veröffentlichungsnummer: WO 2020/107046

(56) Entgegenhaltungen:
- WO-A1-2016/177452
- WO-A1-2018/209373
- DE-A1- 19 907 617

## Beschreibung

Die Erfindung betrifft eine Werkzeugmaschine mit zwei Werkstücktischen zur Aufnahme von Werkstücken.

Aus der WO 2005/025801 A1 und der WO 00/37213 A2 sind sogenannte Doppelspindelmaschinen bekannt. Bei derartigen Doppelspindelmaschinen können zwei Werkstücke gleichzeitig mit jeweils einem in die Werkzeugspindeln eingesetzten Werkzeug bearbeitet werden. Beide Werkzeugspindeln und damit auch beide Werkzeuge werden synchron in den drei Achsen des Koordinatensystems verfahren, so dass an den beiden Werkstücken identische Bearbeitungsvorgänge ablaufen.

Die aus der WO 2005/025801 A1 und der WO 00/37213 A2 bekannten Doppelspindelmaschinen weisen den Nachteil auf, dass aufgrund deren Aufbau die maximale Länge des Werkstückes, welches bearbeitet werden kann, begrenzt ist.

Die WO 2018/209373 A1 offenbart eine Werkzeugmaschine, die folgende Bauteile umfasst: ein Maschinengestell; eine Spindelverstellvorrichtung, welche am Maschinengestell angeordnet ist; zumindest eine erste Arbeitsspindel, welche um eine erste Spindelachse drehbar gelagert ist, und eine zweite Arbeitsspindel, welche um eine zweite Spindelachse drehbar gelagert ist, wobei die Arbeitsspindeln an der Spindelverstellvorrichtung aufgenommen sind und mittels der Spindelverstellvorrichtung in einer vertikalen Z-Achse, in einer horizontalen X-Achse und in einer im rechten Winkel zur Z-Achse und X-Achse angeordneten Y-Achse relativ zum Maschinengestell verstellbar sind; eine Werkstückspannvorrichtung, welche am Maschinengestell angeordnet ist und zum Aufnehmen zumindest eines ersten Werkstückes und eines zweiten Werkstückes ausgebildet ist. Die Spindelverstellvorrichtung umfasst einen Arbeitskopf, an dem die beiden Arbeitsspindeln angeordnet sind und dass die Werkstückspannvorrichtung zumindest einen ersten Werkstücktisch und einen zweiten Werkstücktisch umfasst, wobei der erste Werkstücktisch um eine erste Schwenkachse, welche parallel zur X-Achse ausgerichtet ist, schwenkbar gelagert ist und der zweite Werkstücktisch um eine zweite Schwenkachse, welche parallel zur X-Achse ausgerichtet ist, schwenkbar gelagert ist und dass die erste Arbeitsspindel dem ersten Werkstücktisch zugeordnet ist und die zweite Arbeitsspindel dem zweiten Werkstücktisch zugeordnet ist.

Die WO 2016/177452 A1, die die Basis für den Oberbegriff der Ansprüche 1 und 8 bildet, und die DE 199 07 617 A1 offenbaren weitere Werkzeugmaschinen.

Aufgabe der vorliegenden Erfindung war es, die Nachteile des Standes der Technik zu überwinden und eine Werkzeugmaschine zur Verfügung zu stellen, mittels derer Werkstücke mit großer Länge bearbeitet werden können.

Diese Aufgabe wird durch eine Vorrichtung gemäß den Ansprüchen gelöst.

Erfindungsgemäß ist eine Werkzeugmaschine nach Anspruch 1 ausgebildet.

Darüber hinaus kann vorgesehen sein, dass der Abstand der ersten Schwenkachse zur zweiten Schwenkachse verstellbar ist. Dies bringt den Vorteil mit sich, dass der Abstand bei Werkstücken mit einer geringeren Breite vermindert werden kann, um die Verfahrwege der Arbeitsspindel zu verkürzen.

Erfindungsgemäß ist ein außerdem ein Verfahren zum Herstellen eines Werkstückes auf einer Werkzeugmaschine, nach Anspruch 8.

Insbesondere kann vorgesehen sein, dass eine Bearbeitungsstelle des ersten Werkstückes bearbeitet wird, anschließend die Arbeitsspindel in Richtung der Y-Achse verschoben wird und anschließend die gleiche Bearbeitungsstelle am zweiten Werkstück bearbeitet wird. Natürlich kann dies auch in der umgekehrten Reihenfolge erfolgen.

Weiters kann vorgesehen sein, dass das erste Werkstück und das zweite Werkstück gleich oder spiegelsymmetrisch ausgebildet sind und dass am ersten Werkstück und am zweiten Werkstück mittels des in der Arbeitsspindel gespannten Werkzeuges abwechselnd die gleichen Bearbeitungsschritte durchgeführt werden. Dies bringt den Vorteil mit sich, dass beide Werkstücke in einem möglichst kurzen Zeitrahmen bearbeitet werden können, wobei die Verfahrwege der ersten Arbeitsspindel zwischen den beiden Werkstücken möglichst kurz sein kann.

Ferner kann es zweckmäßig sein, wenn nach dem Bearbeiten eines der beiden Werkstücke die Arbeitsspindel in einer horizontalen, und im rechten Winkel zur X-Achse angeordneten, Y-Achse bewegt wird, um einen gleichen Bearbeitungsschritt am anderen Werkstück durchzuführen.

Darüber hinaus kann vorgesehen sein, dass ein Abstand der ersten Schwenkachse und der zweiten Schwenkachse zueinander an die jeweils in den Werkstücktischen gespannten Werkstücke angepasst wird. Durch diese Maßnahme kann der Abstand bei breiteren Werkstücken vergrößert werden und bei schmäleren Werkstücken verringert werden, um den notwendigen Verfahrweg zwischen den beiden Werkstücken möglichst gering zu halten. Hierbei kann vorgesehen sein, dass beim Spannen von neuen Werkstücken der Abstand verändert wird. Ferner kann es zweckmäßig sein, wenn die beiden Werkstücke derart in den Werkstücktischen gespannt werden, dass je Werkstück mehr als 50% der in einer Aufspannung benötigten Arbeitszeit an jenen Bearbeitungsstellen des Werkstückes durchgeführt werden, welche an einer dem anderen Werkstück zugewandten Hälfte des zu bearbeitenden Werkstückes liegen. Dies bringt den Vorteil mit sich, dass die Verfahrstrecke der ersten Arbeitsspindel zwischen den beiden Werkstücken möglichst geringgehalten werden kann und somit die gesamte Bearbeitungszeit möglichst geringgehalten werden kann.

Außerdem kann vorgesehen sein, dass während dem Bearbeiten eines der beiden Werkstücke, das andere zu bearbeitende Werkstück an der Werkzeugmaschine gespannt, oder von dieser entfernt wird. Durch diese Maßnahme kann erreicht werden, dass die Bearbeitungszeit weiter verkürzt werden kann, da der Werkstückwechsel gleichzeitig zum Bearbeiten des anderen Werkstückes erfolgen kann.

Weiters kann vorgesehen sein, dass eine Werkzeugmaschine ausgebildet ist, die folgende Bauteile umfasst:
ein Maschinengestell;
eine Spindelverstellvorrichtung, welche am Maschinengestell angeordnet ist;
zumindest eine erste Arbeitsspindel, welche um eine erste Spindelachse drehbar gelagert ist, und eine zweite Arbeitsspindel, welche um eine zweite Spindelachse drehbar gelagert ist, wobei die Arbeitsspindeln an der Spindelverstellvorrichtung aufgenommen sind und mittels der Spindelverstellvorrichtung in einer vertikalen Z-Achse, in einer horizontalen X-Achse und in einer im rechten Winkel zur Z-Achse und X-Achse angeordneten Y-Achse relativ zum Maschinengestell verstellbar sind;
eine Werkstückspannvorrichtung, welche am Maschinengestell angeordnet ist und zum Aufnehmen zumindest eines ersten Werkstückes und eines zweiten Werkstückes ausgebildet ist.

Die Spindelverstellvorrichtung umfasst einen Arbeitskopf, an dem die Arbeitsspindel angeordnet ist und dass die Werkstückspannvorrichtung zumindest einen ersten Werkstücktisch und einen zweiten Werkstücktisch umfasst, wobei der erste Werkstücktisch um eine erste Schwenkachse, welche parallel zur X-Achse ausgerichtet ist, schwenkbar gelagert ist und der zweite Werkstücktisch um eine zweite Schwenkachse, welche parallel zur X-Achse ausgerichtet ist, schwenkbar gelagert ist.

Weiters kann vorgesehen sein, dass der Arbeitskopf um eine Arbeitskopfschwenkachse, welche parallel zur Y-Achse ausgerichtet ist, schwenkbar gelagert ist.

Von Vorteil an der erfindungsgemäßen Werkzeugmaschine ist, dass für jedes der beiden Werkstücke ein eigener Werkstücktisch vorgesehen ist, welcher um eine eigene Schwenkachse schwenkbar ist. Dadurch können in der vorliegenden Werkzeugmaschine zwei Werkstücke mit einer großen Längserstreckung gespannt werden und parallel zueinander bearbeitet werden.

Weiters kann es zweckmäßig sein, wenn die Spindelverstellvorrichtung eine Hauptverstelleinheit aufweist, welche mittels einer X-Achsen-Linearführung mit dem Maschinengestell gekoppelt ist und entlang der X-Achse relativ zum Maschinengestell verschiebbar ist und dass die Spindelverstellvorrichtung eine Höhenverstelleinheit aufweist, welche mittels einer Z-Achsen-Linearführung mit der Hauptverstelleinheit gekoppelt ist und entlang der Z-Achse relativ zur Hauptverstelleinheit verschiebbar ist und dass die Spindelverstellvorrichtung eine Ausschubeinheit aufweist, welche mittels einer Y-Achsen-Linearführung mit der Höhenverstelleinheit gekoppelt ist und entlang der Y-Achse relativ zur Höhenverstelleinheit verschiebbar ist, wobei der Arbeitskopf mittels einer Schwenklagerung mit der Ausschubeinheit gekoppelt ist und um die Arbeitskopfschwenkachse relativ zur Ausschubeinheit schwenkbar ist. Durch diese Anordnung können die Bearbeitungswerkzeuge zielgerichtet relativ zu den zu bearbeitenden Werkstücken positioniert werden.

Erfindungsgemäß sind die beiden Werkstücktische jeweils mittels einer ersten Schwenklagerung und mittels einer zweiten Schwenklagerung mit dem Maschinengestell gekoppelt, wobei beide Werkstücktische einen Werkstückspannbereich aufweisen, welcher jeweils zwischen den beiden Schwenklagerungen ausgebildet ist. Von Vorteil ist hierbei, dass durch diese Ausbildung die Werkstücktische frei bezüglich ihrer Schwenkachse drehbar sind und zur Aufnahme von Werkstücken mit einer großen Längserstreckung dienen.

Darüber hinaus kann vorgesehen sein, dass der Werkstückspannbereich bezüglich der X-Achse eine nutzbare Werkstückspannlänge zwischen 1000mm und 8000mm, insbesondere zwischen 1400mm und 5000mm, bevorzugt zwischen 1500mm und 2500mm aufweist. Dadurch können Werkstücke mit einer großen Längserstreckung am Werkstücktisch gespannt werden.

Ferner kann es zweckmäßig sein, wenn die erste Schwenkachse des ersten Werkstücktisches und die zweite Schwenkachse des zweiten Werkstücktisches bezüglich der Y-Achse in einem Abstand versetzt zueinander angeordnet sind.

Weiters kann vorgesehen sein, dass die beiden Werkstücktische in deren Drehbewegung um die Schwenkachsen von einer gemeinsamen Antriebseinheit angetrieben werden. Von Vorteil ist hierbei, dass durch diese Maßnahme ein zusätzlicher Antrieb eingespart werden kann. Zusätzlich ist gewährleistet, dass die beiden Werkstücktische synchron zueinander bewegt werden.

Gemäß einer besonderen Ausprägung ist es möglich, dass die gemeinsame Antriebseinheit mittels eines Schneckengetriebes mit den beiden Werkstücktischen gekoppelt ist.

Alternativ dazu kann vorgesehen sein, dass die gemeinsame Antriebseinheit mittels eines Zahnriemens mit den beiden Werkstücktischen gekoppelt ist.

Insbesondere kann es vorteilhaft sein, wenn die Antriebseinheit in Form eines Torquemotors ausgebildet ist. Von Vorteil ist hierbei, dass ein derartiger Torquemotor bei einer hohen Positioniergenauigkeit gleichzeitig zum Aufbringen eines großen Drehmomentes ausgebildet ist.

Darüber hinaus kann vorgesehen sein, dass die beiden Werkstücktische ausschließlich um die X-Achse schwenkbar sind und ansonsten nicht relativ zum Maschinengestell bewegbar sind. Von Vorteil ist hierbei, dass durch diese Maßnahme eine möglichst geringe Anzahl von eigenständigen Antrieben benötigt wird und die Werkzeugmaschine dabei eine große Vielfältigkeit bezüglich deren möglicher Bewegung aufweist. Darüber hinaus kann durch diese Maßnahme erreicht werden, dass die Werkzeugmaschine möglichst geringe Abmaße aufweist, da die Werkstücke nicht um deren normal auf die Längsachse der Längserstreckung stehende Hochachse rotiert werden müssen.

Weiters kann vorgesehen sein, dass beide Werkstücktische gemeinsam oder unabhängig voneinander in Richtung der Y-Achse verschiebbar sind. Durch diese Maßnahme kann erreicht werden, dass es nicht zwingend erforderlich ist, dass der Arbeitskopf, insbesondere die Arbeitsspindel in Richtung der Y-Achse verschoben werden, um eine Bearbeitung der Werkstücke zu ermöglichen. Diese Transferierung der Verstelleinheit vom Arbeitskopf hin zu den Werkstücktischen bringt den Vorteil mit sich, dass ein massiverer Gesamtaufbau der Werkzeugmaschine realisiert werden kann, wodurch während dem Betrieb Schwingungen vermieden werden können und somit die Genauigkeit des bearbeiteten Werkstückes verbessert werden kann.

Außerdem kann vorgesehen sein, dass beide Werkstücktische gemeinsam oder unabhängig voneinander in Richtung der X-Achse verschiebbar sind. Durch diese Maßnahme kann erreicht werden, dass es nicht zwingend erforderlich ist, dass der Arbeitskopf, insbesondere die Arbeitsspindel in Richtung der X-Achse verschoben werden, um eine Bearbeitung der Werkstücke zu ermöglichen. Diese Transferierung der Verstelleinheit vom Arbeitskopf hin zu den Werkstücktischen bringt den Vorteil mit sich, dass ein massiverer Gesamtaufbau der Werkzeugmaschine realisiert werden kann, wodurch während dem Betrieb Schwingungen vermieden werden können und somit die Genauigkeit des bearbeiteten Werkstückes verbessert werden kann.

Darüber hinaus kann vorgesehen sein, dass beide Werkstücktische gemeinsam oder unabhängig voneinander in Richtung der Z-Achse verschiebbar sind. Durch diese Maßnahme kann erreicht werden, dass es nicht zwingend erforderlich ist, dass der Arbeitskopf, insbesondere die Arbeitsspindel in Richtung der Z-Achse verschoben werden, um eine Bearbeitung der Werkstücke zu ermöglichen. Diese Transferierung der Verstelleinheit vom Arbeitskopf hin zu den Werkstücktischen bringt den Vorteil mit sich, dass ein massiverer Gesamtaufbau der Werkzeugmaschine realisiert werden kann, wodurch während dem Betrieb Schwingungen vermieden werden können und somit die Genauigkeit des bearbeiteten Werkstückes verbessert werden kann.

Weiters kann vorgesehen sein, dass in Richtung der X-Achse versetzt ein dritter Werkstücktisch und ein vierter Werkstücktisch ausgebildet sind, welche ebenfalls um die erste Schwenkachse und um die zweite Schwenkachse schwenkbar sind, wobei die Arbeitsspindel zum Bearbeiten von am ersten Werkstücktisch und am zweiten Werkstücktisch, als auch von am dritten Werkstücktisch und am vierten Werkstücktisch gespannten Werkstücken ausgebildet ist. Dadurch kann erreicht werden, dass beispielsweise im dritten Werkstücktisch und im vierten Werkstücktisch gespannte Werkstücke bearbeitet werden, und gleichzeitig am ersten Werkstücktisch und am zweiten Werkstücktisch ein Werkstückwechsel durchgeführt wird, oder auch umgekehrt.

Weiters kann vorgesehen sein, dass eine weitere Spindelverstellvorrichtung ausgebildet ist, an welcher der Arbeitskopf ebenfalls aufgenommen ist. Durch diese Maßnahme kann erreicht werden, dass der Arbeitskopf nicht fliegend gelagert ist, sondern dass der Arbeitskopf eine zusätzliche Lagerstelle aufweist und somit die Stabilität des Arbeitskopfes erhöht wird.

Weiters kann auch vorgesehen sein, dass an einem oder mehreren der Schwenktische ein Schwenkmassenausgleich ausgebildet ist. Der Schwenkmassenausgleich dient dazu, um eine Schwerachse des Schwenktisches in die Schwenkachse zu verlagern. Dies Bringt den Vorteil mit sich, dass bei Wegfall des Drehmomentes der Antriebseinheit für die Schwenkbewegung der Schwenktisch nicht schwerkraftbedingt in eine Drehbewegung versetzt wird. Der Schwenkmassenausgleich kann in Form von Gegengewichten ausgebildet sein. Weiters ist es auch denkbar, dass der Schwenkmassenausgleich durch Federelemente gebildet wird. Weiters kann vorgesehen sein, dass der Schwenkmassenausgleich an die Masse bzw. den Massenschwerpunkt des jeweils gespannten Werkstückes angepasst ist.

Ein spiegelsymmetrisches Werkstück im Sinne dieses Dokumentes bedeutet, dass ein erstes Werkstück vorhanden ist und ein um eine Spiegelebene gespiegeltes zweites Werkstück vorhanden ist, welches als spiegelsymmetrisches Werkstück bezeichnet wird. Das spiegelsymmetrische Werkstück kann hierbei alle Merkmale des ersten Werkstückes in gespiegelter Form aufweisen.

In einer Alternative ist es auch denkbar, dass das spiegelsymmetrische Werkstück in dessen Grundstruktur ein gespiegeltes Abbild des ersten Werkstückes bildet, wobei einzelne Merkmale des spiegelsymmetrischen Werkstückes unterschiedlich zum ersten Werkstück sind. Dies ist beispielsweise dann der Fall, wenn die Werkstücke in Autos verbaut werden und hier geringfügige Unterschiede zwischen einem linken Werkstück und einem rechten Werkstück bestehen, weil etwa ein Tankdeckel nur auf einer Seite des Autos vorhanden ist. Auch derartige geringfügig abgewandelte Teile werden im Sinne dieses Dokumentes als spiegelsymmetrisches Werkstück gesehen.

Zum besseren Verständnis der Erfindung wird diese anhand der nachfolgenden Figuren näher erläutert.

Es zeig in stark vereinfachter, schematischer Darstellung:
- Fig. 1: eine schematische Darstellung eines Beispiels einer Werkzeugmaschine mit zwei Arbeitsspindeln, das nicht zur Erfindung gehört;

- Fig. 2: eine schematische Darstellung eines Ausführungsbeispiels einer erfindungsgemäßen Werkzeugmaschine mit einer Arbeitsspindel;
- Fig. 3: eine Draufsicht auf einen ersten und einen zweiten Werkstücktisch;
- Fig. 4: eine schematische Darstellung eines Ausführungsbeispiels einer Werkzeugmaschine mit einer Arbeitsspindel und zwei Spindelverstellvorrichtungen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

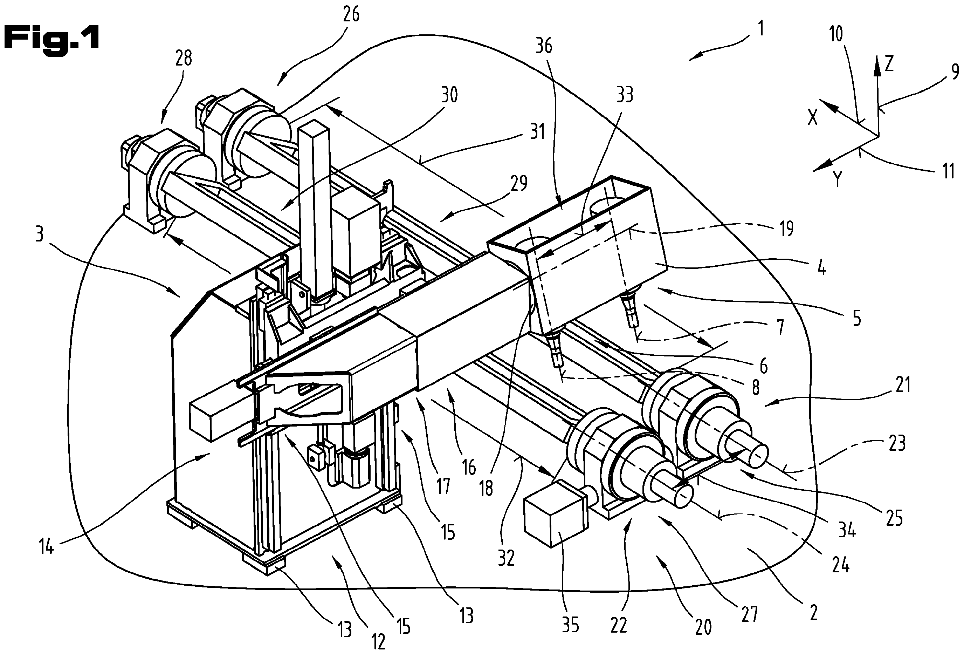

Fig. 1 zeigt eine schematische Darstellung einer Werkzeugmaschine 1 zur spanabhebenden Bearbeitung von Werkstücken 37, 38. Die Werkzeugmaschine 1 weist ein Maschinengestell 2 auf, welches als Basis für die daran angebauten Bauteile dient.

Das Maschinengestell 2 ist in Fig. 1 der Übersichtlichkeit halber nur schematisch dargestellt. Es sei jedoch festgehalten, dass das Maschinengestell 2 am Aufstellungsort verankert sein kann. Darüber hinaus dient das Maschinengestell 2 natürlich zur Aufnahme sämtlicher Bauteile der Werkzeugmaschine 1.

Weiters ist eine Spindelverstellvorrichtung 3 ausgebildet, welche am Maschinengestell 2 angeordnet ist bzw. mit diesem gekoppelt ist. Die Spindelverstellvorrichtung 3 weist einen Arbeitskopf 4 auf, an welchem eine erste Arbeitsspindel 5 und eine zweite Arbeitsspindel 6 gelagert sind. Die erste Arbeitsspindel 5 ist um eine erste Spindelachse 7 drehbar am Arbeitskopf 4 gelagert und die zweite Arbeitsspindel 6 ist um eine zweite Spindelachse 8 drehbar am Arbeitskopf 4 gelagert. Die beiden Arbeitsspindeln 5, 6 dienen jeweils zur Aufnahme eines Bearbeitungswerkzeugs und weisen hierzu eine Spannvorrichtung zur Aufnahme des Bearbeitungswerkzeuges auf.

Die Arbeitsspindeln 5, 6 sind mittels der Spindelverstellvorrichtung 3 in einer vertikalen Z-Achse 9, in einer horizontalen X-Achse 10 und in einer im rechten Winkel zur Z-Achse 9 und X-Achse 10 angeordneten Y-Achse 11 relativ zum Maschinengestell 2 verstellbar.

Die Spindelverstellvorrichtung 3 weist eine Hauptverstelleinheit 12 auf, welche mittels einer X-Achsen-Linearführung 13 mit dem Maschinengestell 2 gekoppelt ist. Zur vereinfachten Veranschaulichung ist die X-Achsen-Linearführung 13 nur rudimentär dargestellt. Insbesondere kann vorgesehen sein, dass die X-Achsen-Linearführung 13 vier Führungsschlitten aufweist, welche mit der Hauptverstelleinheit 12 gekoppelt sind und welche mit zwei Führungsschienen zusammenwirken, die mit dem Maschinengestell 2 gekoppelt sind.

Durch die X-Achsen-Linearführung 13 ist die Hauptverstelleinheit 12 in Richtung der X-Achse 10 relativ bezüglich des Maschinengestells 2 verschiebbar.

Weiters kann vorgesehen sein, dass eine Höhenverstelleinheit 14 ausgebildet ist, welche mittels einer Z-Achsen-Linearführung 15 mit der Hauptverstelleinheit 12 gekoppelt ist. Durch die Z-Achsen-Linearführung 15 ist die Höhenverstelleinheit 14 entlang der Z-Achse 9 relativ zur Hauptverstelleinheit 12 bzw. relativ zum Maschinengestell 2 verschiebbar.

Die Z-Achsen-Linearführung 15 kann ebenfalls eine Führungsschiene aufweisen, welche an der Hauptverstelleinheit 12 angeordnet ist und welche mit Führungsschlitten gekoppelt ist, die an der Höhenverstelleinheit 14 angeordnet sind.

Weiters ist eine Ausschubeinheit 16 ausgebildet, welche mittels einer Y-Achsen-Linearführung 17 an der Höhenverstelleinheit 14 angeordnet ist. Mittels der Y-Achsen-Linearführung 17 ist die Ausschubeinheit 16 in Richtung der Y-Achse 11 relativ zur Höhenverstelleinheit 14, zur Hauptverstelleinheit 12 und zum Maschinengestell 2 verschiebbar. Die Y-Achsen-Linearführung 17 kann beispielsweise in Form eines Teleskoparmes ausgeführt sein. Alternativ dazu ist es denkbar, dass die Y-Achsen-Linearführung 17 beispielsweise ebenfalls Führungsschlitten umfassen, welche mit einer Führungsschiene gekoppelt sind.

Außerdem kann vorgesehen sein, dass der Arbeitskopf 4 mittels einer Schwenklagerung 18 schwenkbar bezüglich einer Arbeitskopfschwenkachse 19 an der Ausschubeinheit 16 aufgenommen ist.

In einer nicht dargestellten Alternativvariante kann vorgesehen sein, dass der Arbeitskopf 4 starr an der Ausschubeinheit 16 aufgenommen ist.

Die Arbeitskopfschwenkachse 19 ist parallel zur Y-Achse 11 ausgerichtet. Die Arbeitskopfschwenkachse 19 und die beiden Spindelachsen 7, 8 liegen vorzugsweise in einer Ebene und sind im rechten Winkel zueinander angeordnet.

Durch den beschriebenen Aufbau der Spindelverstellvorrichtung 3 ist der Arbeitskopf 4 bezüglich dem Maschinengestell 2 in der Z-Achse 9, in der X-Achse 10 und in der Y-Achse 11 verschiebbar sowie bezüglich der parallel zur Y-Achse 11 liegenden Arbeitskopfschwenkachse 19 verdrehbar.

Außerdem umfasst die Werkzeugmaschine 1 eine Werkstückspannvorrichtung 20, welche zur Aufnahme von zu bearbeitenden Werkstücken 37, 38 dient. Die Werkstückspannvorrichtung 20 weist einen ersten Werkstücktisch 21 und einen zweiten Werkstücktisch 22 auf. Der erste Werkstücktisch 21 ist bezüglich einer ersten Schwenkachse 23 relativ zum Maschinengestell 2 verschwenkbar. Der zweite Werkstücktisch 22 ist bezüglich einer zweiten Schwenkachse 24 relativ zum Maschinengestell 2 verschwenkbar. Die beiden Schwenkachsen 23, 24 der beiden Werkstücktische 21, 22 sind parallel zur X-Achse 10 angeordnet. Insbesondere ist vorgesehen, dass der erste Werkstücktisch 21 zur Aufnahme eines ersten Werkstückes 37 dient und der zweite Werkstücktisch 22 zur Aufnahme eines zweiten Werkstückes 38 dient, wobei das erste Werkstück 37 und das zweite Werkstück 38 in deren Außenkontur gleich zueinander sind und an den beiden Werkstücken37, 38 die gleichen Bearbeitungsschritte durchgeführt werden. Die beiden Werkstücktische 21, 22 sind der Übersichtlichkeit halber in Fig. 1 ebenfalls nur rudimentär dargestellt. Natürlich können verschiedenste Befestigungsmöglichkeiten zur Befestigung der Werkstücke 37, 38 an den Werkstücktischen 21, 22 vorgesehen sein.

Der erste Werkstücktisch 21 ist mittels einer ersten Schwenklagerung 25 und einer zweiten Schwenklagerung 26 drehbar am Maschinengestell 2 gelagert. Analog dazu ist der zweite Werkstücktisch 22 mittels einer ersten Schwenklagerung 27 und einer zweiten Schwenklagerung 28 drehbar am Maschinengestell 2 gelagert. Die Schwenklagerungen 25, 26, 27, 28 können beispielsweise in Form von Lagerböcken ausgebildet sein, welche entsprechenden Aufnahmen am Werkstücktisch 21 befestigt sind.

Wie aus Fig. 1 ersichtlich, kann vorgesehen sein, dass der erste Werkstücktisch 21 einen Werkstückspannbereich 29 aufweist, welcher sich zwischen der ersten Schwenklagerung 25 und der zweiten Schwenklagerung 26 erstreckt. Analog dazu kann vorgesehen sein, dass der zweite Werkstücktisch 22 einen Werkstückspannbereich 30 aufweist, welcher sich zwischen der ersten Schwenklagerung 27 und der zweiten Schwenklagerung 28 des zweiten Werkstücktisches 22 erstreckt.

Der Werkstückspannbereich 29 des ersten Werkstücktisches 21 weist eine Werkstückspannlänge 31 auf. Der Werkstückspannbereich 30 des zweiten Werkstücktisches 22 weist eine Werkstückspannlänge 32 auf. Vorzugsweise ist vorgesehen, dass der erste Werkstücktisch 21 und der zweite Werkstücktisch 22 gleich ausgebildet sind.

Um die gesamte Werkstückspannlänge 31, 32 der beiden Werkstücktische 21, 22 nutzen zu können, kann vorgesehen sein, dass die X-Achsen-Linearführung 13 der Hauptverstelleinheit 12 um diesen Betrag der Werkstückspannlänge 31, 32 plus dem doppelten Abstand von der Arbeitskopfschwenkachse 19 zur Werkzeugspitze verschiebbar ist. Dadurch können auch die Stirnseiten von Werkstücken 37, 38 mit einer maximalen Länge die der Werkstückspannlänge 31, 32 entspricht noch bearbeitet werden. Die beiden Arbeitsspindeln 5, 6 bzw. die beiden Spindelachsen 7, 8 sind in einem Abstand 33 zueinander angeordnet. Der Abstand 33 erstreckt sich in Richtung der Y-Achse 11.

Die beiden Werkstücktische 21, 22 bzw. die beiden Schwenkachsen 23, 24 sind in einem Abstand 34 zueinander angeordnet. Der Abstand 34 erstreckt sich ebenfalls in Richtung der Y-Achse 11. Durch die beschriebene Ausprägung wird erreicht, dass die erste Arbeitsspindel 5 dem ersten Werkstücktisch 21 zugeordnet ist und dass die zweite Arbeitsspindel 6 dem zweiten Werkstücktisch 22 zugeordnet ist.

In einer Ausführungsvariante kann vorgesehen sein, dass im Arbeitskopf 4 eine Verstellvorrichtung angeordnet ist, mittels welcher der Abstand 33 der ersten Spindelachse 7 der ersten Arbeitsspindel 5 und der zweiten Spindelachse 8 der zweiten Arbeitsspindel 6 zueinander verstellt werden kann.

Alternativ dazu oder zusätzlich dazu kann vorgesehen sein, dass in der Werkstückspannvorrichtung 20 eine Verstellvorrichtung angeordnet ist, mittels welcher der Abstand 34 der beiden Werkstücktische 21, 22 bzw. der beiden Schwenkachsen 23, 24 zueinander verstellt werden kann.

Mittels dieser Werkzeugmaschine 1 können zwei Werkstücke 37, 38, die baugleich ausgebildet sind, parallel zueinander bearbeitet werden. Hierbei wird das erste Werkstück 37 am ersten Werkstücktisch 21 und das zweite Werkstück 38 am zweiten Werkstücktisch 22 gespannt. Das Werkzeug der ersten Arbeitsspindel 5 bearbeitet das erste Werkstück 37 und das Werkzeug der zweiten Arbeitsspindel 6 bearbeitet das zweite Werkstück 38. Durch den erfindungsgemäßen Aufbau der Werkzeugmaschine 1 erfolgt die Bearbeitung des ersten Werkstückes 37 und des zweiten Werkstückes 38 synchron. Somit können mittels einer möglichst einfach aufgebauten Werkzeugmaschine 1 zwei Werkstücke 37, 38 gleichzeitig bearbeitet werden, wodurch die Auslastung der Werkzeugmaschine 1 bzw. deren Produktivität verbessert werden kann.

Um die Werkzeugmaschine 1 möglichst günstig aufbauen zu können, kann darüber hinaus vorgesehen sein, dass die Werkstücktische 21, 22 mittels einer gemeinsamen Antriebseinheit 35 geschwenkt werden. Die Antriebseinheit 35 kann beispielsweise in Form eines Torquemotors ausgebildet sein.

Der Torquemotor kann beispielsweise mittels eines Riementriebes mit den beiden Werkstücktischen 21, 22 gekoppelt sein. Alternativ dazu kann vorgesehen sein, dass der Torquemotor mittels eines Schneckengetriebes mit den beiden Werkstücktischen 21, 22 gekoppelt ist.

In wieder einer andern Alternativvariante kann vorgesehen sein, dass der Rotor des Torquemotors direkt in den Werkstücktischen 21, 22 integriert ist und somit je Werkstücktisch 21, 22 ein eigener Torquemotor ausgebildet ist.

Weiters kann ebenfalls vorgesehen sein, dass die beiden Arbeitsspindeln 5, 6 von einer gemeinsamen Antriebseinheit 36 angetrieben werden. Die Antriebseinheit 36 kann beispielsweise durch einen Drehstromasynchronmotor gebildet sein, welcher mit einem Frequenzumrichter angesteuert wird.

Weiters ist es auch denkbar, dass die Antriebseinheit 36 in Form eines Synchronmotors ausgebildet ist.

Natürlich kann auch vorgesehen sein, dass jede der Arbeitsspindeln 5, 6 von einer eigenen Antriebseinheit 36 angetrieben wird. Hierbei kann vorgesehen sein, dass die Arbeitsspindel 5, 6 gleichzeitig der Läufer der Antriebseinheit 36 ist.

Die Arbeitsspindeln 5, 6 der in Fig. 1 dargestellten Werkzeugmaschine 1 sind bezüglich der Z-Achse 9, der X-Achse 10 und der Y-Achse 11 verschiebbar und bezüglich einer Parallelen zur Y-Achse verschwenkbar. Die in den Werkstücktischen 21, 22 aufgenommenen Werkstücke 37, 38 sind bezüglich einer Parallelen zur X-Achse 10 verschwenkbar. Somit weisen die Arbeitsspindeln 5, 6 fünf Freiheitsgrade bezüglich der Verstellung relativ zum bearbeitenden Werkstück 37, 38 auf.

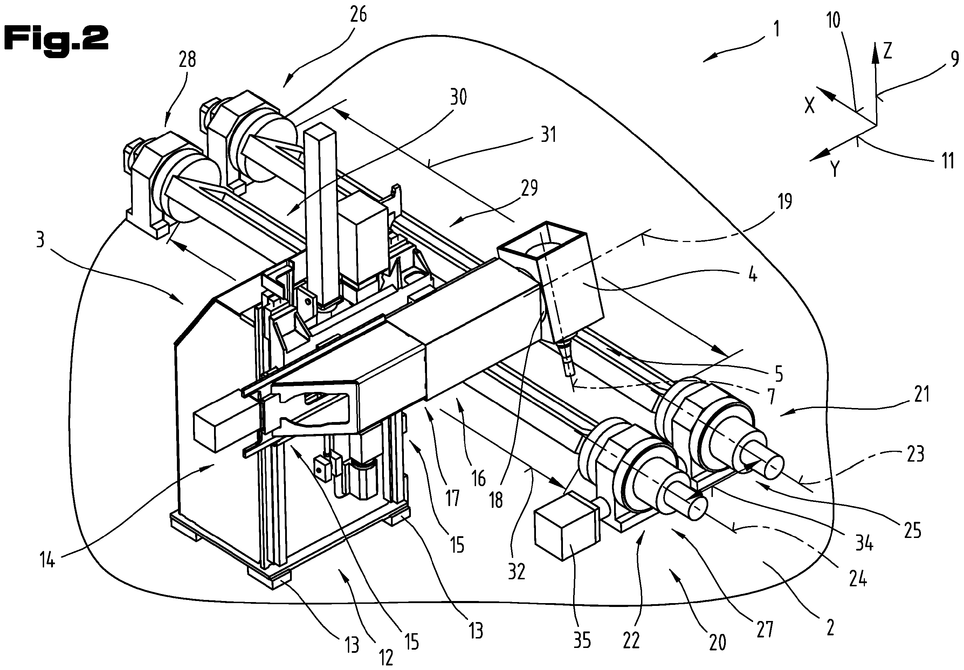

Weiters kann vorgesehen sein, dass zumindest eine der Arbeitsspindeln 5, 6 einzeln und unabhängig von der anderen Arbeitsspindel 5, 6 in einer Axialrichtung der Spindelachse 7, 8 der Arbeitsspindel 5, 6 relativ zum Arbeitskopf 4 verstellbar ausgebildet ist. In einer Weiterbildung kann vorgesehen sein, dass beide Arbeitsspindeln 5, 6 in einer Axialrichtung der Spindelachse 7, 8 der Arbeitsspindel 5, 6 relativ zum Arbeitskopf 4 verstellbar ausgebildet sind. In der Fig. 2 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen. Insbesondere wird darauf hingewiesen, dass das Ausführungsbeispiel jener Werkzeugmaschine 1, welche in Fig. 2 dargestellt ist, die gleichen Merkmale oder zumindest teilweise die gleichen Merkmale wie jenes Ausführungsbeispiel der Werkzeugmaschine 1, welche in Fig. 1 dargestellt ist aufweisen kann.

Wie aus Fig. 2 ersichtlich, ist es erfindungsgemäß vorgesehen, dass an der der Werkzeugmaschine 1 nur die erste Arbeitsspindel 5 ausgebildet ist. Die erste Arbeitsspindel 5 ist hierbei sowohl zum Bearbeiten des ersten Werkstückes 37, als auch zum Bearbeiten des zweiten Werkstückes 38 ausgebildet. Erfindungsgemäß ist es ebenfalls vorgesehen, dass die erste Arbeitsspindel 5 in Richtung der Y-Achse 11 soweit verfahrbar ist, dass diese sowohl im Bereich des ersten Werkstücktisches 21, als auch im Bereich des zweiten Werkstücktisches 22 die notwendigen Bearbeitungsschritte durchführen kann.

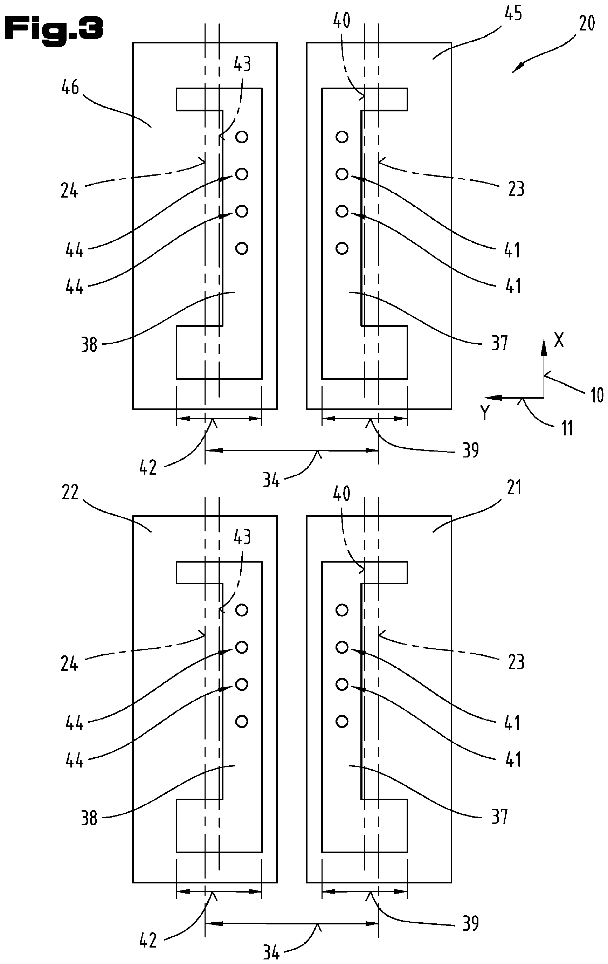

In der Fig. 3 sind die Werkstücktische 22, 21 in einer Draufsicht gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Wie aus Fig. 3 ersichtlich, kann vorgesehen sein, dass das am ersten Werkstücktisch 21 aufgenommene erste Werkstück 37 spiegelsymmetrisch zum am zweiten Werkstücktisch 22 aufgenommenen zweiten Werkstück 38 ausgebildet ist. Derartige spiegelsymmetrische Werkstücke 37, 38 können beispielsweise linke bzw. rechte Teile bei einem Fahrzeug sein.

Das erste Werkstück 37 weist eine Breite 39 auf, welche in der Draufsicht der Fig. 3 ersichtlich ist. Die Breite 39 des ersten Werkstückes 37 wird über dessen gesamter Erstreckung entlang der Y-Achse 11 definiert. Mittig der Breite 39 des ersten Werkstückes 37 ist eine virtuelle erste Mittelebene 40 ausgebildet. Weiters sind die Bearbeitungsstellen 41 des ersten Werkstückes 37 dargestellt, an welchen dieses Bearbeitet wird. Die Bearbeitungsstellen 41 des ersten Werkstückes 37 können beispielsweise Bohrungen oder Frässtellen sein.

Das zweite Werkstück 38 weist eine Breite 42 auf, welche ebenfalls in der Draufsicht der Fig. 3 ersichtlich ist. Die Breite 42 des zweiten Werkstückes 38 wird über dessen gesamter Erstreckung entlang der Y-Achse 11 definiert. Mittig der Breite 42 des zweiten Werkstückes 38 ist eine virtuelle zweite Mittelebene 43 ausgebildet. Weiters sind die Bearbeitungsstellen 44 des zweiten Werkstückes 38 dargestellt, an welchen dieses Bearbeitet wird. Die Bearbeitungsstellen 44 des zweiten Werkstückes 38 können beispielsweise Bohrungen oder Frässtellen sein.

Wie aus Fig. 3 ersichtlich, können die zustellstrecken eines Bearbeitungswerkzeuges, welches sowohl das erste Werkstück 37, als auch das zweite Werkstück 38 bearbeitet, möglichst kurz gehalten werden, wenn die Bearbeitungsstellen 41 des ersten Werkstückes 37 und die Bearbeitungsstellen 44 des zweiten Werkstückes 38 möglichst nahe aneinander liegen. Dies kann einerseits dadurch erreicht werden, dass der Abstand 34 der Werkstücktische 21, 22 zueinander möglichst gering eingestellt wird, sodass die beiden Werkstücke 37, 38 möglichst nahe aneinander liegen. Als weitere Maßnahme können die beiden Werkstücke 37, 38 derart in den Werkstücktischen 21, 22 gespannt werden, dass je Werkstück 37, 38 mehr als 50% der in einer Aufspannung benötigten Arbeitszeit an jenen Bearbeitungsstellen des Werkstückes 37, 38 durchgeführt werden, welche an einer dem anderen Werkstück 37, 38 zugewandten Hälfte des zu bearbeitenden Werkstückes 37, 38 liegen. Insbesondere können, wie in Fig. 3 ersichtlich, die beiden Werkstücke 37, 38 derart in den Werkstücktischen 21, 22 gespannt werden, dass je Werkstück 37, 38 mehr als 50% der Bearbeitungsstellen 41, 44 an einer dem anderen Werkstück 37, 38 zugewandten Hälfte des zu bearbeitenden Werkstückes 37, 38 liegen.

Die Hälfte des Werkstückes 37, 38 wird hierbei jeweils durch die Mittelebene 40, 43 definiert. Wie aus Fig. 3 weiters ersichtlich, kann vorgesehen sein, dass in Richtung der X-Achse 10 versetzt ein dritter Werkstücktisch 45 und ein vierter Werkstücktisch 46 ausgebildet sind. Der dritte Werkstücktisch 45 und der vierte Werkstücktisch 46 können ebenfalls um die erste Schwenkachse 23 und um die zweite Schwenkachse 24 schwenkbar gelagert sein. Weiters kann vorgesehen sein, dass die Arbeitsspindel 5 zum Bearbeiten von am ersten Werkstücktisch 21 und am zweiten Werkstücktisch 22, als auch von am dritten Werkstücktisch 45 und am vierten Werkstücktisch 46 gespannten Werkstücken 37, 38 ausgebildet ist. Der dritte Werkstücktisch 45 und der vierte Werkstücktisch 46 können analog zum ersten Werkstücktisch 21 und zum zweiten Werkstücktisch 22 ausgebildet bzw. aufgebaut sein.

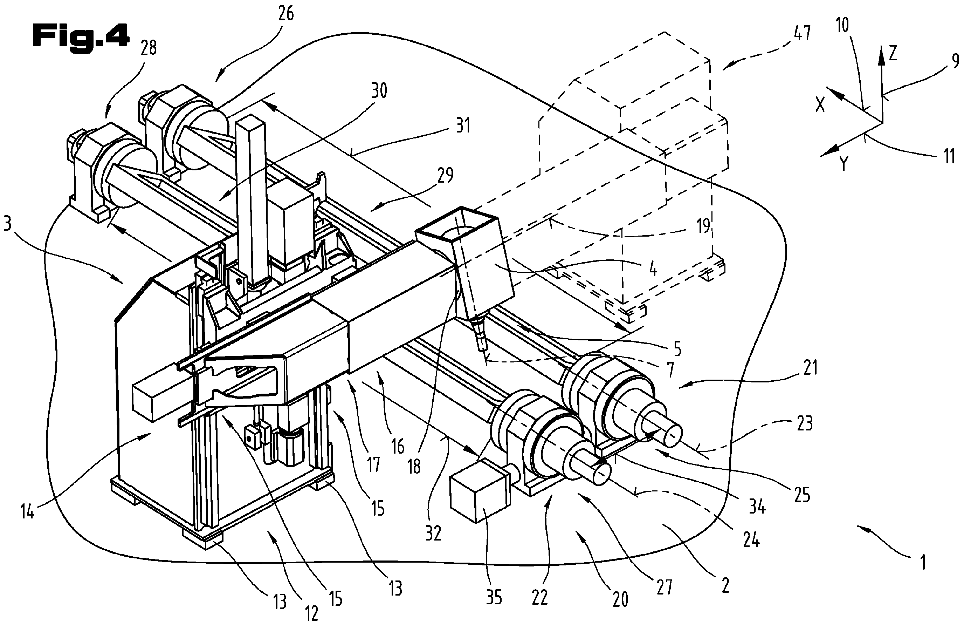

In der Fig. 4 ist in einer schematischen Darstellung eine weitere und gegebenenfalls für sich eigenständige Ausführungsform der Werkzeugmaschine 1 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in der vorangegangenen Fig. 1 und 2 hingewiesen bzw. Bezug genommen.

Wie aus Fig. 4 ersichtlich, kann vorgesehen sein, dass eine weitere Spindelverstellvorrichtung 47 ausgebildet ist, an welcher der Arbeitskopf 4 ebenfalls aufgenommen ist. Die weitere Spindelverstellvorrichtung 47 kann analog zur Spindelverstellvorrichtung 3 ausgebildet sein. Im Betrieb der Werkzeugmaschine 1 werden die beiden Spindelverstellvorrichtungen 3, 47 synchron zueinander bewegt.

Der Schutzbereich ist durch die Ansprüche bestimmt.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Werkzeugmaschine | 28 | zweite Schwenklagerung zweiter |
| 2 | Maschinengestell | | Werkstücktisch |
| 3 | Spindelverstellvorrichtung | 29 | Werkstückspannbereich erster |
| 4 | Arbeitskopf | | Werkstücktisch |
| 5 | erste Arbeitsspindel | 30 | Werkstückspannbereich zweiter |
| 6 | zweite Arbeitsspindel | | Werkstücktisch |
| 7 | erste Spindelachse | 31 | Werkstückspannlänge Werkstückspannbereich erster Werkstücktisch |
| 8 | zweite Spindelachse | | |
| 9 | Z-Achse | | |
| 10 | X-Achse | 32 | Werkstückspannlänge Werkstückspannbereich zweiter Werkstücktisch |
| 11 | Y-Achse | | |
| 12 | Hauptverstelleinheit | | |
| 13 | X-Achsen-Linearführung | 33 | Abstand Arbeitsspindeln |
| 14 | Höhenverstelleinheit | 34 | Abstand Werkstücktische |
| 15 | Z-Achsen-Linearführung | 35 | Antriebseinheit Werkstücktische |
| 16 | Ausschubeinheit | 36 | Antriebseinheit Arbeitsspindeln |
| 17 | Y-Achsen-Linearführung | 37 | erstes Werkstück |
| 18 | Schwenklagerung Arbeitskopf | 38 | zweites Werkstück |
| 19 | Arbeitskopfschwenkachse | 39 | Breite erstes Werkstück |
| 20 | Werkstückspannvorrichtung | 40 | Mittelebene erstes Werkstück |
| 21 | erster Werkstücktisch | 41 | Bearbeitungsstelle erstes Werkstück |
| 22 | zweiter Werkstücktisch | | |
| 23 | erste Schwenkachse | 42 | Breite zweites Werkstück |
| 24 | zweite Schwenkachse | 43 | Mittelebene zweites Werkstück |
| 25 | erste Schwenklagerung erster | 44 | Bearbeitungsstelle zweites Werkstück |
| | Werkstücktisch | | |
| 26 | zweite Schwenklagerung erster | 45 | dritter Werkstücktisch |
| | Werkstücktisch | 46 | vierter Werkstücktisch |
| 27 | erste Schwenklagerung zweiter | 47 | weitere Spindelverstellvorrichtung |
| | Werkstücktisch | | |

## Patentansprüche

1. Werkzeugmaschine (1) umfassend:
ein Maschinengestell (2); eine Arbeitsspindel (5), welche um eine erste Spindelachse (7) drehbar gelagert ist;
eine Werkstückspannvorrichtung (20), welche zum Aufnehmen zumindest eines ersten Werkstückes (37) und eines zweiten Werkstückes (38) ausgebildet ist,
wobei
die Werkstückspannvorrichtung (20) zumindest einen ersten Werkstücktisch (21) und einen zweiten Werkstücktisch (22) umfasst, wobei der erste Werkstücktisch (21) um eine erste Schwenkachse (23), welche parallel zu einer horizontalen X-Achse (10) ausgerichtet ist, schwenkbar gelagert ist und der zweite Werkstücktisch (22) um eine zweite Schwenkachse (24), welche parallel zur X-Achse (10) ausgerichtet ist, schwenkbar gelagert ist, wobei außer der Arbeitsspindel (5) keine weitere Arbeitsspindel vorgesehen ist, **dadurch gekennzeichnet, dass** die Arbeitsspindel (5) zur Bearbeitung des im ersten Werkstücktisch (21) gespannten ersten Werkstückes (37) und des im zweiten Werkstücktisch (22) gespannten zweiten Werkstückes (38) ausgebildet ist, wobei der erste Werkstücktisch (21) mittels einer ersten Schwenklagerung (25) und einer zweiten Schwenklagerung (26) drehbar am Maschinengestell (2) gelagert ist und wobei der zweite Werkstücktisch (22) mittels einer ersten Schwenklagerung (27) und einer zweiten Schwenklagerung (28) drehbar am Maschinengestell (2) gelagert ist, wobei der erste Werkstücktisch (21) einen Werkstückspannbereich (29) aufweist, welcher sich zwischen der ersten Schwenklagerung (25) und der zweiten Schwenklagerung (26) erstreckt und wobei der zweite Werkstücktisch (22) einen Werkstückspannbereich (30) aufweist, welcher sich zwischen der ersten Schwenklagerung (27) und der zweiten Schwenklagerung (28) des zweiten Werkstücktisches (22) erstreckt, wobei die erste Arbeitsspindel 5 in Richtung einer Y-Achse (11) soweit verfahrbar ist, dass diese sowohl im Bereich des ersten Werkstücktisches (21), als auch im Bereich des zweiten Werkstücktisches (22) die notwendigen Bearbeitungsschritte durchführen kann.

2. Werkzeugmaschine nach Anspruch 1, **dadurch gekennzeichnet, dass** die erste Schwenkachse (23) des ersten Werkstücktisches (21) und die zweite Schwenkachse (24) des zweiten Werkstücktisches (22) bezüglich einer horizontalen, und im rechten Winkel zur X-Achse (10) angeordneten, Y-Achse (11) in einem Abstand (34) versetzt zueinander angeordnet sind.

3. Werkzeugmaschine nach Anspruch 2, **dadurch gekennzeichnet, dass** der Abstand (34) der ersten Schwenkachse (23) zur zweiten Schwenkachse (24) verstellbar ist.

4. Werkzeugmaschine nach einem der vorhergehenden Ansprüche, **dadurch gekennzeichnet, dass** beide Werkstücktische (21, 22) gemeinsam oder unabhängig voneinander in Richtung der Y-Achse (11) verschiebbar sind.

5. Werkzeugmaschine nach einem der vorhergehenden Ansprüche, **dadurch gekennzeichnet, dass** beide Werkstücktische (21, 22) gemeinsam oder unabhängig voneinander in Richtung der X-Achse (10) verschiebbar sind.

6. Werkzeugmaschine nach einem der vorhergehenden Ansprüche, **dadurch gekennzeichnet, dass** beide Werkstücktische (21, 22) gemeinsam oder unabhängig voneinander in Richtung der Z-Achse (9) verschiebbar sind.

7. Werkzeugmaschine nach einem der vorhergehenden Ansprüche, **dadurch gekennzeichnet, dass** in Richtung der X-Achse (10) versetzt ein dritter Werkstücktisch (45) und ein vierter Werkstücktisch (46) ausgebildet sind, welche ebenfalls um die erste Schwenkachse (23) und um die zweite Schwenkachse (24) schwenkbar sind, wobei die Arbeitsspindel (5) zum Bearbeiten von am ersten Werkstücktisch (21) und am zweiten Werkstücktisch (22), als auch von am dritten Werkstücktisch (45) und am vierten Werkstücktisch (46) gespannten Werkstücken (37, 38) ausgebildet ist.

8. Verfahren zum Herstellen eines Werkstückes auf einer Werkzeugmaschine (1), umfassend:
ein Maschinengestell (2);
eine Arbeits spindel (5), welche um eine erste Spindelachse (7) drehbar gelagert ist:
eine Werkstückspannvorrichtung (20) wobei die Werkstückspannvorrichtung (20) zumindest einen ersten Werkstücktisch (21) und einen zweiten Werkstücktisch (22) umfasst, wobei der erste Werkstücktisch (21) um eine erste Schwenkachse (23), welche parallel zu einer horizontalen X-Achse (10) ausgerichtet ist, schwenkbar gelagert ist und der zweite Werkstücktisch (22) um eine zweite Schwenkachse (24), welche parallel zur X-Achse (10) ausgerichtet ist, schwenkbar gelagert ist,
**dadurch gekennzeichnet, dass** das Verfahren folgende Verfahrensschritte umfasst:
- Bearbeiten eines am ersten Werkstücktisch (21) gespannten ersten Werkstückes (37) mittels einem in der Arbeitsspindel (5) gespannten Werkzeuges;
- Bearbeiten eines am zweiten Werkstücktisch (22) gespannten zweiten Werkstückes (38) mittels dem in der Arbeitsspindel (5) gespannten Werkzeuges,
wobei der erste Werkstücktisch (21) mittels einer ersten Schwenklagerung (25) und einer zweiten Schwenklagerung (26) drehbar am Maschinengestell (2) gelagert ist und wobei der zweite Werkstücktisch (22) mittels einer ersten Schwenklagerung (27) und einer zweiten Schwenklagerung (28) drehbar am Maschinengestell (2) gelagert ist, wobei der erste Werkstücktisch (21) einen Werkstückspannbereich (29) aufweist, welcher sich zwischen der ersten Schwenklagerung (25) und der zweiten Schwenklagerung (26) erstreckt und wobei der zweite Werkstücktisch (22) einen Werkstückspannbereich (30) aufweist, welcher sich zwischen der ersten Schwenklagerung (27) und der zweiten Schwenklagerung (28) des zweiten Werkstücktisches (22) erstreckt, wobei die Arbeits spindel 5 in Richtung einer Y-Achse (11) soweit verfahren wird, dass diese sowohl im Bereich des ersten Werkstücktisches (21), als auch im Bereich des zweiten Werkstücktisches (22) die notwendigen Bearbeitungsschritte durchführt.

9. Verfahren nach Anspruch 8, **dadurch gekennzeichnet, dass** das erste Werkstück (37) und das zweite Werkstück (38) gleich oder spiegelsymmetrisch ausgebildet sind und dass am ersten Werkstück (37) und am zweiten Werkstück (38) mittels des in der ersten Arbeitsspindel (5) gespannten Werkzeuges abwechselnd die gleichen Bearbeitungsschritte durchgeführt werden.

10. Verfahren nach Anspruch 9, **dadurch gekennzeichnet, dass** nach dem Bearbeiten eines der beiden Werkstücke (37, 38) die Arbeitsspindel (5) in einer horizontalen, und im rechten Winkel zur X-Achse (10) angeordneten, Y-Achse (11) bewegt wird, um einen gleichen Bearbeitungsschritt am anderen Werkstück (37, 38) durchzuführen.

11. Verfahren nach einem der Ansprüche 8 bis 10, **dadurch gekennzeichnet, dass** ein Abstand (34) der ersten Schwenkachse (23) und der zweiten Schwenkachse (24) zueinander an die jeweils in den Werkstücktischen (21, 22) gespannten Werkstücke (37, 38) angepasst wird.

12. Verfahren nach einem der Ansprüche 8 bis 11, **dadurch gekennzeichnet, dass** die beiden Werkstücke (37, 38) derart in den Werkstücktischen (21, 22) gespannt werden, dass je Werkstück (37, 38) mehr als 50% der in einer Aufspannung benötigten Arbeitszeit an jenen Bearbeitungsstellen des Werkstückes (37, 38) durchgeführt werden, welche an einer dem anderen Werkstück (37, 38) zugewandten Hälfte des zu bearbeitenden Werkstückes (37, 38) liegen.

13. Verfahren nach einem der Ansprüche 8 bis 12, **dadurch gekennzeichnet, dass** während dem Bearbeiten eines der beiden Werkstücke (37, 38), das andere zu bearbeitende Werkstück (37, 38) an der Werkzeugmaschine (1) gespannt, oder von dieser entfernt wird.

## Claims

1. A machine tool (1) comprising:
a machine frame (2);
a working spindle (5) which is mounted so as to be rotatable about a first spindle axis (7);
a workpiece clamping device (20) which is designed to receive at least a first workpiece (37) and a second workpiece (38),
wherein
the workpiece clamping device (20) comprises at least a first workpiece table (21) and a second workpiece table (22), wherein the first workpiece table (21) is mounted so as to be pivotable about a first pivot axis (23) which is aligned parallel to a horizontal X-axis (10), and the second workpiece table (22) is mounted so as to be pivotable about a second pivot axis (24) which is aligned parallel to the X-axis (10),
wherein, apart from the working spindle (5), no further working spindle is provided,
**characterized in that** the working spindle (5) is designed for processing the first workpiece (37) clamped in the first workpiece table (21) and the second workpiece (38) clamped in the second workpiece table (22), wherein the first workpiece table (21) is rotatably mounted on the machine frame (2) by means of a first pivot bearing (25) and a second pivot bearing (26), and wherein the second workpiece table (22) is rotatably mounted on the machine frame (2) by means of a first pivot bearing (27) and a second pivot bearing (28), wherein the first workpiece table (21) has a workpiece clamping area (29) which extends between the first pivot bearing (25) and the second pivot bearing (26), and wherein the second workpiece table (22) has a workpiece clamping area (30) which extends between the first pivot bearing (27) and the second pivot bearing (28) of the second workpiece table (22), wherein the first working spindle (5) can be moved in the direction of a Y-axis (11) to such an extent that it can carry out the necessary processing steps both in the region of the first workpiece table (21) and in the region of the second workpiece table (22).

2. The machine tool according to claim 1, **characterized in that** the first pivot axis (23) of the first workpiece table (21) and the second pivot axis (24) of the second workpiece table (22) are arranged offset from each other at a distance (34) with respect to a horizontal Y-axis (11) arranged at a right angle to the X-axis (10).

3. The machine tool according to claim 2, **characterized in that** the distance (34) of the first pivot axis (23) to the second pivot axis (24) is adjustable.

4. The machine tool according to one of the preceding claims, **characterized in that** both workpiece tables (21, 22) are displaceable in the direction of the Y-axis (11) together or independently of one another.

5. The machine tool according to one of the preceding claims, **characterized in that** both workpiece tables (21, 22) are displaceable in the direction of the X-axis (10) together or independently of one another.

6. The machine tool according to one of the preceding claims, **characterized in that** both workpiece tables (21, 22) are displaceable in the direction of the Z-axis (9) together or independently of one another.

7. The machine tool according to one of the preceding claims, **characterized in that** a third workpiece table (45) and a fourth workpiece table (46) are formed offset in the direction of the X-axis (10), which are also pivotable about the first pivot axis (23) and about the second pivot axis (24), wherein the working spindle (5) is embodied for processing workpieces (37, 38) clamped on the first workpiece table (21) and on the second workpiece table (22), as well as on the third workpiece table (45) and on the fourth workpiece table (46).

8. A method for producing a workpiece on a machine tool (1) comprising:
a machine frame (2);
a working spindle (5) which is mounted so as to be rotatable about a first spindle axis (7);
a workpiece clamping device (20), wherein the workpiece clamping device (20) comprises at least a first workpiece table (21) and a second workpiece table (22),
wherein the first workpiece table (21) is mounted so as to be pivotable about a first pivot axis (23) which is aligned parallel to a horizontal X-axis (10), and the second workpiece table (22) is mounted so as to be pivotable about a second pivot axis (24) which is aligned parallel to the X-axis (10),
**characterized in that** the method comprises the following method steps:
- processing a first workpiece (37) clamped on the first workpiece table (21) by means of a tool clamped in the work spindle (5);
- machining a second workpiece (38) clamped on the second workpiece table (22) by means of the tool clamped in the work spindle (5),
wherein the first workpiece table (21) is rotatably mounted on the machine frame (2) by means of a first pivot bearing (25) and a second pivot bearing (26), and wherein the second workpiece table (22) is rotatably mounted on the machine frame (2) by means of a first pivot bearing (27) and a second pivot bearing (28), wherein the first workpiece table (21) has a workpiece clamping area (29) which extends between the first pivot bearing (25) and the second pivot bearing (26), and wherein the second workpiece table (22) has a workpiece clamping area (30) which extends between the first pivot bearing (27) and the second pivot bearing (28) of the second workpiece table (22), wherein the working spindle (5) is moved in the direction of a Y-axis (11) to such an extent that it carries out the necessary processing steps both in the region of the first workpiece table (21) and in the region of the second workpiece table (22).

9. The method according to claim 8, **characterized in that** the first workpiece (37) and the second workpiece (38) are embodied so as to be identical or mirror-symmetrical, and that the same processing steps are performed alternately on the first workpiece (37) and on the second workpiece (38) by means of the tool clamped in the first working spindle (5).

10. The method according to claim 9, **characterized in that** after processing one of the two workpieces (37, 38), the working spindle (5) is moved in a horizontal Y-axis (11), which is arranged at a right angle to the X-axis (10), to carry out an equal processing step on the other workpiece (37, 38).

11. The method according to any one of claims 8 to 10, **characterized in that** a distance (34) of the first pivot axis (23) and the second pivot axis (24) from each other is adapted to the workpieces (37, 38) that are in each case clamped in the workpiece tables (21, 22).

12. The method according to one of the claims 8 to 11, **characterized in that** the two workpieces (37, 38) are clamped in the workpiece tables (21, 22) in such a way that for each workpiece (37, 38) more than 50% of the working time required in a clamping operation is performed at those processing points of the workpiece (37, 38) which are located on a half of the workpiece (37, 38) to be processed facing the other workpiece (37, 38).

13. The method according to one of claims 8 to 12, **characterized in that** during processing of one of the two workpieces (37, 38), the other workpiece (37, 38) to be processed is clamped to the machine tool (1) or removed therefrom.

## Revendications

1. Machine-outil (1) comprenant:
un bâti de machine (2) ;
une broche de travail (5) qui est logée de manière rotative autour d'un premier axe de broche (7) ;
un dispositif de serrage de pièce (20) qui est conçu pour le logement d'au moins une première pièce (37) et d'une deuxième pièce (38),
dans laquelle
le dispositif de serrage de pièce (20) comprend au moins une première table porte-pièce (21) et une deuxième table porte-pièce (22), dans laquelle la première table porte-pièce (21) est logée de manière pivotante autour d'un premier axe de pivotement (23) qui est orienté parallèlement à un axe X horizontal (10) et la deuxième table porte-pièce (22) est logée de manière pivotante autour d'un deuxième axe de pivotement (24), qui est orienté parallèlement à l'axe X (10), dans laquelle, en plus de la broche de travail (5), n'est prévue aucune autre broche de travail,
**caractérisée en ce que** la broche de travail (5) est conçue pour l'usinage de la première pièce (37) serrée dans la première table porte-pièce (21) et de a deuxième pièce (38) serrée dans la deuxième table porte-pièce (22), dans laquelle la première table porte-pièce (21) est logée de manière rotative au niveau du bâti de machine (2) au moyen d'un premier palier de pivotement (25) et d'un deuxième palier de pivotement (26) et dans laquelle la deuxième table porte-pièce (22) est logée de manière rotative au niveau du bâti de machine (2) au moyen d'un premier palier de pivotement (27) et d'un deuxième palier de pivotement (28), dans laquelle la première table porte-pièce (21) comprend une partie de serrage de pièce (29) qui s'étend entre le premier palier de pivotement (25) et le deuxième palier de pivotement (26) et dans laquelle la deuxième table porte-pièce (22) comprend une partie de serrage de pièce (30) qui s'étend entre le premier palier de pivotement (27) et le deuxième palier de pivotement (28) de la deuxième table porte-pièce (22), dans laquelle la première broche de travail (5) est mobile dans la direction d'un axe Y (11) jusqu'à ce qu'elle puisse effectuer les étapes d'usinage nécessaires aussi bien au niveau de la première table porte-pièce (21) qu'au niveau de la deuxième table porte-pièce (22).

2. Machine-outil selon la revendication 1, **caractérisée en ce que** le premier axe de pivotement (23) de la première table porte-pièce (21) et le deuxième axe de pivotement (24) de la deuxième table porte-pièce (22) sont disposés de manière décalée entre eux, à, une distance (34), par rapport à un axe Y (11) horizontal disposé à angle droit par rapport à l'axe X (10).

3. Machine-outil selon la revendication 2, **caractérisée en ce que** la distance (34) entre le premier axe de pivotement (23) et le deuxième axe de pivotement (24) est réglable.

4. Machine-outil selon l'une des revendications précédentes, **caractérisée en ce que** les deux tables porte-pièces (21, 22) peuvent coulisser conjointement ou indépendamment l'une de l'autre dans la direction de l'axe Y (11).

5. Machine-outil selon l'une des revendications précédentes, **caractérisée en ce que** les deux tables porte-pièces (21, 22) peuvent coulisser conjointement ou indépendamment l'une de l'autre dans la direction de l'axe X (10).

6. Machine-outil selon l'une des revendications précédentes, **caractérisée en ce que** les deux tables porte-pièces (21, 22) peuvent coulisser conjointement ou indépendamment l'une de l'autre dans la direction de l'axe Z (9).

7. Machine-outil selon l'une des revendications précédentes, **caractérisée en ce que**, décalées dans la direction de l'axe X (10), sont prévues une troisième table porte-pièce (45) et une quatrième table porte-pièce (46), qui peuvent également pivoter autour du premier axe de pivotement (23) et autour du deuxième axe de pivotement (24), dans laquelle la broche de travail (5) est conçue pour l'usinage de pièces (37, 38) serrées sur la première table porte-pièce (21) et la deuxième table porte-pièce (22) ainsi que sur la troisième table porte-pièce (45) et la quatrième table porte-pièce (46).

8. Procédé de fabrication d'une pièce sur une machine-outil (1), comprenant :
un bâti de machine (2) ;
une broche de travail (5), qui est logée de manière rotative autour d'un premier axe de broche (7) ;
un dispositif de serrage de pièce (20), dans lequel le dispositif de serrage de pièce (20) comprend au moins une première table porte-pièce (21) et une deuxième table porte-pièce (22), dans lequel la première table porte-pièce (21) est logée de manière pivotante autour d'un premier axe de pivotement (23) qui est orienté parallèlement à un axe X horizontal (10) et la deuxième table porte-pièce (22) est logée de manière pivotante autour d'un deuxième axe de pivotement (24), qui est orienté parallèlement à l'axe X (10),
**caractérisé en ce que** le procédé comprend les étapes suivantes :
- usinage d'une première pièce (37) serrée sur la première table porte-pièce (21) au moyen d'un outil serré dans la broche de travail (5) ;
- usinage d'une deuxième pièce (38) serrée sur la deuxième table porte-pièce (22) au moyen de l'outil serré dans la broche de travail (5) ;
dans lequel la première table porte-pièce (21) est logée de manière rotative au niveau du bâti de machine (2) au moyen d'un premier palier de pivotement (25) et d'un deuxième palier de pivotement (26) et dans lequel la deuxième table porte-pièce (22) est logée de manière rotative au niveau du bâti de machine (2) au moyen d'un premier palier de pivotement (27) et d'un deuxième palier de pivotement (28), dans lequel la première table porte-pièce (21) comprend une partie de serrage de pièce (29) qui s'étend entre le premier palier de pivotement (25) et le deuxième palier de pivotement (26) et dans laquelle la deuxième table porte-pièce (22) comprend une partie de serrage de pièce (30) qui s'étend entre le premier palier de pivotement (27) et le deuxième palier de pivotement (28) de la deuxième table porte-pièce (22), dans laquelle la broche de travail (5) est déplacée dans la direction d'un axe Y (11) jusqu'à ce qu'elle effectue les étapes d'usinage nécessaires aussi bien au niveau de la première table porte-pièce (21) qu'au niveau de la deuxième table porte-pièce (22).

9. Procédé selon la revendication 8, **caractérisé en ce que** la première pièce (37) et la deuxième pièce (38) sont conçues de manière identique ou avec une symétrie en miroir et **en ce que**, sur la première pièce (37) et sur la deuxième pièce (38), sont effectuées alternativement les mêmes étapes d'usinage au moyen de l'outil serré dans la première broche de travail (5).

10. Procédé selon la revendication 9, **caractérisé en ce que**, après l'usinage d'une des deux pièces (37, 38), la broche de travail (5) est déplacée sur un axe Y (11), disposé à angle droit par rapport à l'axe X (10), afin d'effectuer une même étape d'usinage sur l'autre pièce (37, 38).

11. Procédé selon l'une des revendications 8 à 10, **caractérisé en ce qu'**une distance (34) entre le premier axe de pivotement (23) et le deuxième axe de pivotement (24) est adaptée respectivement aux pièces (37, 38) serrées dans les tables porte-pièces (21, 22).

12. Procédé selon l'une des revendications 8 à 11, **caractérisé en ce que** les deux pièces (37, 38) sont serrées dans les tables porte-pièces (21, 22) de façon à ce que, pour chaque pièce (37, 38), sont effectués plus de 50 % du temps de travail nécessaire dans un serrage au niveau des points d'usinage de la pièce (37, 38) qui se trouvent sur la moitié de la pièce à usiner (37, 38) orientée vers l'autre pièce (37, 38).

13. Procédé selon l'une des revendications 8 à 12, **caractérisé en ce que**, pendant l'usinage d'une des deux pièces (37, 38), l'autre pièce à usiner (37, 38) est serrée sur la machine-outil (1) ou retirée de celle-ci.
